# EUROPÄISCHE PATENTANMELDUNG

(11) **EP 2 980 427 A1**
(43) Veröffentlichungstag der Anmeldung: **03.02.2016**
(21) Anmeldenummer: 15178562.3
(22) Anmeldetag: 28.07.2015
(51) Int. Cl.: F16C 17/18, F16C 32/06, F16C 33/04, F16C 17/22, F16C 33/10

(54) **GLEITLAGERVORRICHTUNG**

(30) Priorität: 31.07.2014 DE 102014110907
(71) Anmelder: Rolls-Royce Deutschland Ltd & Co KG, 15827 Blankenfelde-Mahlow (DE)
(72) Erfinder: Lück, Rudolf, 14558 Nuthetal-Rehbrücke (DE)
(74) Vertreter: Schmidt, Martin Michael

(57) **Zusammenfassung**

Es wird eine Gleitlagervorrichtung (1) mit einem inneren ringförmigen Innenelement (5), wenigstens einem das Innenelement (5) in radialer Richtung (7) der Gleitlagervorrichtung (1) umfassenden wenigstens annähernd ringförmig aus geführten Zwischenelement (11) und einem das wenigstens eine Zwischenelement (11) in radialer Richtung (7) der Gleitlagervorrichtung (1) umfassenden ringförmigen Außenelement (9) beschrieben. Das Innenelement (5) ist relativ zu dem Außenelement (7) und das wenigstens eine Zwischenelement (11) ist relativ zu dem Innenelement (5) und relativ zu dem Außenelement (7) drehbar. In einem Grundzustand der Gleitlagervorrichtung (1) ist das Innenelement (5) zu dem wenigstens einen Zwischenelement (11) in radialer Richtung (7) der Gleitlagervorrichtung (1) und das wenigstens eine Zwischenelement (11) zu dem Außenelement (9) beabstandet. Das Innenelement (5) und das Außenelement (7) sind mit einem metallischen Werkstoff und das wenigstens eine Zwischenelement (11) mit einem nichtmetallischen Werkstoff ausgeführt.

## Beschreibung

Die Erfindung betrifft eine Gleitlagervorrichtung mit einem ringförmigen Innenelement, einem ringförmigen Zwischenelement und einem ringförmigen Außenelement gemäß der im Oberbegriff des Patentanspruches 1 näher definierten Art.

Hydrodynamische Gleitlagervorrichtungen werden beispielsweise bei einem Planetenradsatz eingesetzt, um Planetenräder des Planetenradsatzes gegenüber einem Planetenträger zu lagern. Derartige Gleitlagervorrichtungen weisen einen Innenring und einen Außenring auf, die relativ zueinander drehbar sind, wobei während eines Betriebs des Planetenradsatzes zwischen dem Innenring und dem Außenring Differenzdrehzahlen beispielsweise im Bereich von 3.000 Umdrehungen pro Minute bis 4.000 Umdrehungen pro Minute vorliegen können.

Bei derartigen Gleitlagervorrichtungen besteht die Gefahr, dass der aus Metall bestehende Innenring und der ebenfalls aus Metall bestehende Außenring in Anlage zueinander gelangen. Durch einen derartigen Kontakt zwischen dem Innenring und dem Außenring kann es zu lokalen Mikroverschweißungen zwischen dem Innenring und dem Außenring der Gleitlagervorrichtung kommen. Insbesondere bei einer Anfahrbewegung der Gleitlagervorrichtung mit einer Erhöhung der Relativgeschwindigkeit des Innenrings gegenüber dem Außenrings der Gleitlagervorrichtung werden diese Mikroverschweißungen wieder gelöst, wobei durch diesen Vorgang der Innenring und der Außenring verschleißen und die Lebensdauer der Gleitlagervorrichtung in unerwünschtem Umfang reduziert wird.

Aus der DE 10 2012 202 341 A1 ist ein Radiallager für einen Abgasturbolader bekannt. Das Radiallager ist als öldurchflutetes Schwimmbuchsenlager ausgeführt, wobei in radialer Richtung betrachtet zwischen einer inneren rotierenden Welle und einem äußeren Lagergehäuse eine drehbare Schwimmbuchse angeordnet ist, wobei ein Schmierspalt zwischen dem Lagergehäuse und der Schwimmbuchse sowie ein Schmierspalt zwischen der Schwimmbuchse und der Welle mit Schmieröl gefüllt sind. Das Schwimmbuchsenlager führt im Betrieb Drehzahlen von bis zu 300.000 Umdrehungen pro Minute aus, wobei hierbei aufgrund von auftretenden Turbulenzen in den Ölschichten Instabilitäten in der Achslage des Lagers auftreten können.

Da auch die Elemente des Schwimmbuchsenlagers, d. h. die Welle, das Lagergehäuse und die Schwimmbuchse, üblicherweise mit metallischen Werkstoffen ausgebildet sind, kann grundsätzlich auch bei einer derartigen Ausführung bei einer Anfahrbewegungen ein Kontakt zwischen den Elementen des Schwimmbuchsenlagers, d. h. zwischen der Welle und der Schwimmbuchse bzw. zwischen der Schwimmbuchse und dem Lagergehäuse, vorliegen. Hierbei können sich im Bereich der Elemente des Schwimmbuchsenlagers Mikroverschweißungen bilden, die bei einer Erhöhung der Relativgeschwindigkeit anschließend wieder gelöst werden. Dieser Vorgang kann wiederum zu einem unerwünscht großen Verschleiß mit entsprechenden Nachteilen bezüglich der Lebensdauer des Schwimmbuchsenlagers führen.

Der vorliegenden Erfindung liegt die Aufgabe zugrunde, eine Gleitlagervorrichtung zur Verfügung zu stellen, welche auf einfache Art und Weise eine gegenüber bekannten Gleitlagervorrichtungen vergrößerte Lebensdauer aufweist.

Erfindungsgemäß wird diese Aufgabe mit einer Gleitlagervorrichtung mit den Merkmalen des Patentanspruches 1 gelöst.

Es wird eine Gleitlagervorrichtung mit einem inneren ringförmigen Innenelement, wenigstens einem das Innenelement in radialer Richtung der Gleitlagervorrichtung umfassenden wenigstens annähernd ringförmig ausgeführten Zwischenelement und einem das wenigstens eine Zwischenelement in radialer Richtung der Gleitlagervorrichtung umfassenden ringförmigen Außenelement vorgeschlagen, wobei das Innenelement relativ zu dem Außenelement und das wenigstens eine Zwischenelement relativ zu dem Innenelement und relativ zu dem Außenelement drehbar ist, und wobei in einem Grundzustand der Gleitlagervorrichtung das Innenelement zu dem wenigstens einen Zwischenelement in radialer Richtung der Gleitlagervorrichtung und das wenigstens eine Zwischenelement zu dem Außenelement beabstandet sind.

Erfindungsgemäß ist vorgesehen, dass das Innenelement und das Außenelement mit einem metallischen Werkstoff und das wenigstens eine Zwischenelement mit einem nicht-metallischen Werkstoff ausgeführt sind.

Die erfindungsgemäße Gleitlagervorrichtung hat den Vorteil, dass ein Verschleiß im Bereich der Gleitlagervorrichtung gegenüber bekannten Gleitlagervorrichtungen auf konstruktiv einfache Art und Weise stark reduziert ist. Dieser Vorteil beruht darauf, dass zwischen dem metallischen Innenelement bzw. dem metallischen Außenelement, die beispielsweise aus Stahl bestehen, und dem wenigstens einen nicht-metallischen Zwischenelement bzw. Inlay keine oder gegenüber bekannten Ausführungen stark reduzierte Mikroverschweißungen auftreten können und somit ein Verschleiß gegenüber bekannten Ausführungen stark reduziert ist.

Zudem ist mit der erfindungsgemäßen Gleitlagervorrichtung durch das Vorsehen des ringförmigen Zwischenelements ein verbesserter Ausgleich einer Schiefstellung zwischen einer Achse des Innenelements und einer Achse des Außenelements im Betrieb der Gleitlagervorrichtung gegenüber herkömmlich bekannten Gleitlagervorrichtungen nur mit einem Innenring und einem Außenring ermöglicht. Vorteilhafterweise weist die erfindungsgemäße Gleitlagervorrichtung dabei eine vergleichbare Robustheit wie diese Gleitlagervorrichtungen auf, wohingegen ein Gleitverschleiß der erfindungsgemäßen Gleitlagervorrichtung gegenüber den bekannten Gleitlagervorrichtungen wesentlich reduziert ist.

Mikroverschweißungen zwischen dem Innenelement bzw. dem Außenelement und dem Zwischenelement können auf besonders effektive Weise reduziert bzw. unterbunden werden, wenn das Zwischenelement mit einem keramischen Werkstoff ausgeführt ist.

Das Innenelement, das Außenelement und das wenigstens eine Zwischenelement weisen insbesondere einen im Wesentlichen zylinderförmigen Grundkörper auf.

Bei einer sehr robusten und langlebigen Gleitlagervorrichtung nach der Erfindung ist vorgesehen, dass ein Abstand zwischen dem Zwischenelement und dem Innenelement und ein Abstand zwischen dem Zwischenelement und dem Außenelement in radialer Richtung der Gleitlagervorrichtung derart gewählt ist, dass im Bereich des wenigstens einen Zwischenelements im Betrieb der Gleitlagervorrichtung auftretende Zugspannungen unterhalb eines definierten Grenzwerts liegen. Eine Beschädigung der Gleitlagervorrichtung im Betrieb kann hierdurch auch bei steigenden Betriebstemperaturen der Gleitlagervorrichtung auf besonders sichere Weise verhindert werden. Damit werden über die erfindungsgemäße konstruktive Ausführung der Gleitlagervorrichtung unterschiedliche Ausdehnungsbestrebungen des Innenelements, des Zwischenelements und des Außenelements berücksichtigt. Das bedeutet, dass ein metallisches Innenelement, das sich bei steigenden Betriebstemperaturen stärker ausdehnt als das keramische Zwischenelement, bei steigenden Betriebstemperaturen im Zwischenelement keine die Funktionalität des Zwischenelements beeinträchtigende Zugspannungen erzeugt.

Wenn eine dem Innenelement zugewandte Fläche des wenigstens einen Zwischenelements und vorzugsweise eine dem Zwischenelement zugewandte Fläche des Innenelements und/oder eine dem Außenelement zugewandte Fläche des wenigstens einen Zwischenelements und vorzugsweise eine dem Zwischenelement zugewandte Fläche des Außenelements in Richtung der Mittelachse der Gleitlagervorrichtung betrachtet vorzugsweise korrespondierend zueinander gekrümmt ausgeführt ist bzw. sind, sind große Schiefstellungen des Innenelements gegenüber dem Außenelement auf einfache Weise verschleißarm ausgleichbar.

Bei einer vorteilhaften Ausführung einer erfindungsgemäßen Gleitlagervorrichtung ist es vorgesehen, dass die Außenfläche des Innenelements, die Innenfläche des Zwischenelements, die Außenfläche des Zwischenelements und/oder die Innenfläche des Außenelements in einem Längsschnitt bezüglich der Mittelachse der Gleitlagervorrichtung betrachtet einen konstanten Krümmungsradius aufweisen. Wenn insbesondere die miteinander zusammenwirkenden Flächen des Innenelements, des Zwischenelements und/oder des Außenelements in der Längsschnittansicht der Gleitlagervorrichtung Teil eines Kreises sind, wobei sich der Radius der einander jeweils zugewandten Flächen des Innenelements und des Zwischenelements bzw. des Zwischenelements und des Außenelements voneinander unterscheiden kann, ist eine Schiefstellung einer Mittelachse des Innenelements gegenüber einer Mittelachse des Außenelements besonders gut und nahezu verschleißfrei ausgleichbar. Die Flächen entsprechen dabei insbesondere einem Ausschnitt einer radial äußeren Fläche eines Torus.

Die Flächen des Innenelements, des Außenelements und des Zwischenelements sind dabei insbesondere jeweils spiegelsymmetrisch zu einer Mittenquerschnittsebene der Gleitlagervorrichtung ausgeführt. Das Zwischenelement kann im Bereich seiner dem Innenelement zugewandten Fläche und/oder im Bereich seiner dem Außenelement zugewandten Fläche sphärisch ausgeführt sein.

Um insbesondere auch eine Gleitlagervorrichtung, die ein Innenelement, ein Außenelement und/oder ein Zwischenelement mit gekrümmten Flächen aufweist, auf einfache Weise montieren zu können, ist das Zwischenelement bei einer vorteilhaften Ausführung der Erfindung in Umfangsrichtung der Gleitlagervorrichtung mehrteilig ausgeführt. Je mehr, insbesondere gleichartig ausgeführte und sich über einen im Wesentlichen vergleichbaren Umfangsbereich der Gleitlagervorrichtung erstreckende Teile das Zwischenelement aufweist, desto einfacher ist die Gleitlagervorrichtung montierbar. Alternativ hierzu kann es auch vorgesehen sein, dass die Abstände zwischen dem Innenelement und dem Außenelement so bemessen sind, dass durch Erwärmen und/oder Abkühlen des Innenelements, des Außenelements und/oder des Zwischenelements eine Montage ermöglicht ist.

Bei einer vorteilhaften Weiterbildung einer Gleitlagervorrichtung nach der Erfindung ist in Umfangsrichtung der Gleitlagervorrichtung zwischen jeweils zwei Teilen des Zwischenelements jeweils ein Trennelement vorgesehen. Zur Montage der Gleitlagervorrichtung werden bei einer derart ausgeführten Gleitlagervorrichtung insbesondere zunächst die Teile des Zwischenelements zwischen das Innenelement und das Außenelement eingeführt und in Umfangsrichtung der Gleitlagervorrichtung mit Stirnflächen miteinander in Anlage gebracht, so dass auf einfache Weise sämtliche Teile des Zwischenelements zwischen das Innenelement und das Außenelement eingeführt werden können. Anschließend kann jeweils ein als Abstandshalter ausgeführtes, insbesondere mit einem elastischen Material ausgebildetes Trennelement, zwischen in Umfangsrichtung der Gleitlagervorrichtung jeweils benachbarte Teile des Zwischenelements eingeführt werden.

Um insbesondere auch eine Gleitlagervorrichtung mit gekrümmten, einander zuweisenden Flächen des Zwischenelements und des Außenelements auf einfache Weise montieren zu können, kann das Außenelement in Achsrichtung der Gleitlagervorrichtung wenigstens zweigeteilt ausgeführt sein, wobei die Teile des Außenelements bei der Montage der Gleitlagervorrichtung miteinander verbunden werden. Die Teile des Außenelements können hierzu beispielsweise über eine Schweißverbindung, eine Schraubverbindung, eine Nietverbindung oder dergleichen miteinander verbunden werden.

Die erfindungsgemäße Gleitlagervorrichtung ist vorzugsweise als hydrodynamische oder hydrostatische Gleitlagervorrichtung ausgeführt, wobei in einem in radialer Richtung der Gleitlagervorrichtung zwischen dem Innenelement und dem Außenelement vorliegenden Raum ein Hydraulikfluid angeordnet ist. Das Zwischenelement ist bei hydrodynamischem Betrieb der Gleitlagervorrichtung insbesondere vollständig von Hydraulikfluid umgeben und zwischen dem Innenelement und dem Außenelement schwimmend gelagert. Die Abstände zwischen den Flächen des Innenelements und des Zwischenelements bzw. zwischen den Flächen des Außenelements und des Zwischenelements sind vorzugsweise derart bemessen, dass im Betrieb der Gleitlagervorrichtungen Zugspannungen im Bereich des Zwischenelements sicher vermieden sind und lediglich Druckspannungen auf das Zwischenelement wirken. Die Gefahr einer Beschädigung des insbesondere aus Keramik bestehenden Zwischenelements ist hierdurch sehr gering. Zudem ist die Gefahr eines unerwünscht starken Verschleißes der Gleitlagervorrichtung bei einer Mangelschmierung gegenüber bekannten Gleitlagervorrichtungen lediglich mit einem Innenring und einem Außenring stark reduziert.

Bei einer vorteilhaften Ausführung der Erfindung wird ein geschlossener Hydraulikfluidraum für das Zwischenelement durch vorzugsweise plattenförmige Seitenelemente geschaffen, die beispielsweise fest mit dem Innenelement oder dem Außenelement verbindbar sind, wobei zwischen dem Außenelement bzw. dem Innenelement und dem Seitenelement eine Dichteinrichtung vorgesehen sein kann.

Die erfindungsgemäße Gleitlagervorrichtung kann beispielsweise bei Planetenradsätzen zur Lagerung von Planetenrädern gegenüber einem Planetenträger zum Einsatz kommen. Da mit der erfindungsgemäßen Gleitlagervorrichtung eine Schiefstellung der Achsen der Elemente besonders gut ausgeglichen werden kann, ist auch eine einseitige Lagerung der Planeten möglich, bei der größere Schiefstellungen auftreten können.

Die Gleitlagervorrichtung ist vorzugsweise als Hochlastgleitlagervorrichtung ausgeführt und führt im Betrieb Umdrehungen bis etwa 10.000 Umdrehungen pro Minute durch, vorzugsweise in der Größenordnung von 3.000 Umdrehungen pro Minute bis 4.000 Umdrehungen pro Minute.

Sowohl die in den Patentansprüchen angegebenen Merkmale als auch die in den nachfolgenden Ausführungsbeispielen der erfindungsgemäßen Gleitlagervorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Gleitlagervorrichtung ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Querschnittsansicht einer erfindungsgemäßen Gleitlagervorrichtung mit einem Innenelement, einem Außenelement und einem in radialer Richtung der Geleitlagervorrichtung zwischen dem Innenelement und dem Außenelement angeordneten Zwischenelement;
- Fig. 2: eine stark vereinfachte Längsschnittansicht der Gleitlagervorrichtung der Fig. 1 zur Lagerung eines Planetenrades gegenüber einem Planetenträger eines ausschnittsweise ersichtlichen Planeten radsatzes;
- Fig. 3: eine stark vereinfachte Querschnittsansicht einer alternativ ausgeführten Gleitlagervorrichtung mit einem mehrteilig ausgebildeten Zwischenelement; und
- Fig. 4: eine stark vereinfachte Längsschnittansicht einer weiteren alternativ ausgeführten Gleitlagervorrichtung mit einem mehrteilig ausgeführten Außenelement.

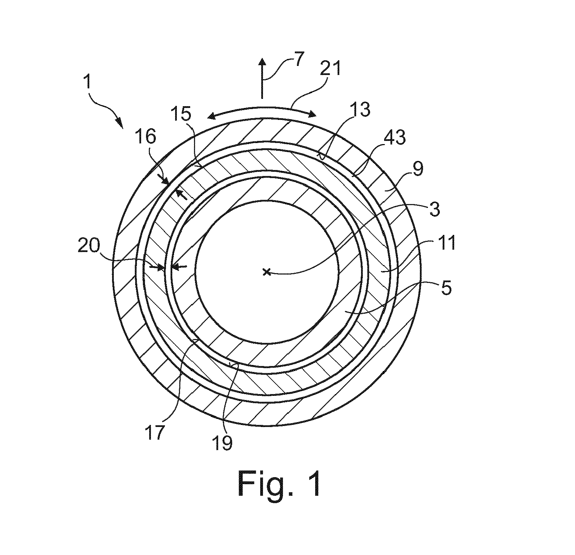

Fig. 1 zeigt eine stark vereinfachte Querschnittsansicht einer insbesondere hydrodynamischen Gleitlagervorrichtung 1 bezüglich einer Mittelachse 3 der Gleitlagervorrichtung 1 in einem Grundzustand. Hierbei ist ersichtlich, dass die als Hochlastgleitlagervorrichtung ausgeführte Gleitlagervorrichtung 1 ein bezüglich der Mittelachse 3 der Gleitlagervorrichtung 1 inneres ringförmiges Innenelement 5 bzw. einen Innenring und ein das Innenelement 5 bezüglich einer radialen Richtung 7 der Gleitlagervorrichtung 1 außenseitig umfassendes, ebenfalls ringförmig ausgeführtes Außenelement 9 bzw. einen Außenring aufweist.

In radialer Richtung 7 der Gleitlagervorrichtung 1 zwischen dem Innenelement 5 und dem Außenelement 9 ist ein hier ebenfalls ringförmig ausgeführtes Zwischenelement 11 angeordnet, wobei das Innenelement 5, das Außenelement 9 und das Zwischenelement 11 jeweils einen im Wesentlichen zylindrischen oder abschnittsweise zylindrischen Grundkörper aufweisen. Unter dem Grundzustand der Gleitlagervorrichtung 1 wird hierbei ein Zustand verstanden, in dem Mittelachsen des Innenelements 5, des Außenelements 9 und des Zwischenelements 11 deckungsgleich mit der Mittelachse 3 der Gleitlagervorrichtung 1 sind und die Gleitlagervorrichtung 1 sich insbesondere in einem lastfreien Zustand befindet.

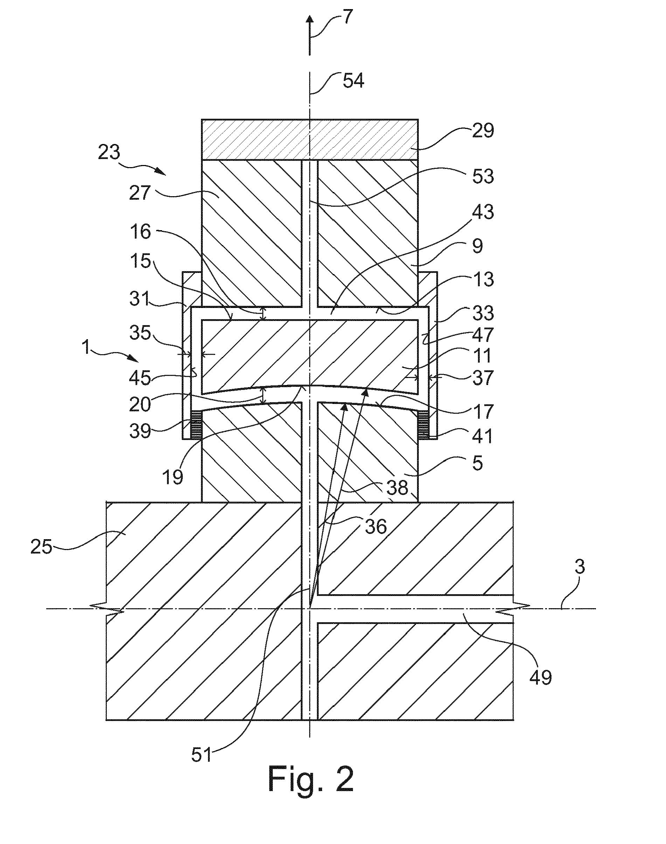

In Fig. 2 ist eine Längsschnittansicht der Gleitlagervorrichtung 1 bezüglich der Mittelachse 3 im Einbauzustand der Gleitlagervorrichtung 1 ersichtlich. Die Gleitlagervorrichtung 1 ist hierbei im Bereich eines lediglich ausschnittsweise ersichtlichen Planetenradsatzes 23 gezeigt, wobei das Innenelement 5 der Gleitlagervorrichtung 1 drehfest mit einem Planetenträger 25 des Planeten radsatzes 23 und das Außenelement 9 der Gleitlagervorrichtung 1 drehfest mit einem Planetenrad 27 des Planetenradsatzes 23 verbunden ist bzw. integral mit diesem ausgeführt ist. Das Planetenrad 27 wiederum wirkt über eine Verzahnung 29, beispielsweise eine doppelte Schrägverzahnung, mit einem nicht näher ersichtlichen Hohlrad des Planetenradsatzes 23 zusammen.

Wie in Fig. 2 ersichtlich ist, weist die Gleitlagervorrichtung 1 zwei ringscheibenförmig ausgeführte seitliche Begrenzungselemente 31, 33 auf, die vorliegend jeweils fest mit dem Außenelement 9 verbunden sind und sich in radialer Richtung 7 der Gleitlagervorrichtung 1 von einem Bereich des Außenelements 9 bis in einen Bereich des Innenelements 5 erstrecken. In Richtung der Mittelachse 3 betrachtet schließen die seitlichen Begrenzungselemente 31, 33 das Zwischenelement 11 der Gleitlagervorrichtung 1 zwischen sich ein.

Das Zwischenelement 11 ist im Betrieb der hydrodynamischen Gleitlagervorrichtung 1 schwimmend in einem Hydraulikfluid, insbesondere Öl, gelagert, das in der Gleitlagervorrichtung 1 in einem Raum 43 angeordnet ist. Der Raum 43 ist von der Außenfläche 17 des Innenelements 5, von der Innenfläche 13 des Außenelements 9 und von dem Zwischenelement 11 zugewandten Flächen 45, 47 der seitlichen Begrenzungselemente 31, 33 gebildet. Um den Raum 43 gegenüber einer Umgebung abzudichten, ist zwischen dem jeweiligen seitlichen Begrenzungselement 31, 33 und dem Innenelement 5 jeweils eine Dichtungseinrichtung 39, 41 vorgesehen.

Im lastfreien Grundzustand der Gleitlagervorrichtung 1, der in den Fig. 1 und 2 ersichtlich ist, ist das Zwischenelement 11 sowohl zu der Außenfläche 17 des Innenelements 5, zu der Innenfläche 13 des Außenelements 9 als auch zu den Flächen 45, 47 der seitlichen Begrenzungselemente 31, 33 beabstandet, sodass das Zwischenelement 11 nicht in Kontakt mit den jeweiligen Flächen 13, 17, 45, 47 steht.

Das Zwischenelement 11 ist vollständig in dem Raum 43 angeordnet, wobei zwischen einer dem Zwischenelement 11 zugewandten Innenfläche 13 des Außenelements 9 und einer dem Außenelement 9 zugewandten Außenfläche 15 des Zwischenelements 11 in unbelastetem Zustand der Gleitlagervorrichtung 1 ein Abstand 16 vorliegt, der im Ruhezustand der Gleitlagervorrichtung 1 in Umfangsrichtung 21 der Gleitlagervorrichtung 1 und in Richtung der Mittelachse 3 der Gleitlagervorrichtung 1 im Wesentlichen konstant ist. Ebenso ist ein zwischen einer dem Zwischenelement 11 zugewandten Außenfläche 17 des Innenelements 5 und einer dem Innenelement 5 zugewandten Innenfläche 19 des Zwischenelements 11 vorgesehener Abstand 20 im Ruhezustand der Gleitlagervorrichtung 1 in Umfangsrichtung 21 der Gleitlagervorrichtung 1 und in Richtung der Mittelachse 3 der Gleitlagervorrichtung 1 im Wesentlichen konstant und entspricht hier etwa dem Abstand 16. Auch in Richtung der Mittelachse 3 der Gleitlagervorrichtung 1 ist zwischen dem jeweiligen seitlichen Begrenzungselement 31, 33 und dem Zwischenelement 11 jeweils ein Abstand 35, 37 vorgesehen, der in unbelastetem Zustand der Gleitlagervorrichtung 1 in radialer Richtung 7 der Gleitlagervorrichtung 1 im Wesentlichen konstant ist.

Das Innenelement 5 und das Außenelement 9 bestehen hier aus einem metallischen Werkstoff, beispielsweise Stahl, wohingegen das Zwischenelement 11 vorliegend aus einem Keramikwerkstoff hergestellt ist. Durch die schwimmende Lagerung des Zwischenelements 11 und eine entsprechende Wahl der Abstände 16, 20 wird auf sichere Weise verhindert, dass im Betrieb der Gleitlagervorrichtung 1 Zugspannungen oberhalb eines definierten Grenzwertes auf das Zwischenelement 11 wirken, die zu einer Beschädigung des aus Keramik bestehenden Zwischenelements 11 führen können. Im Betrieb der Gleitlagervorrichtung 1 wirken vorzugsweise lediglich Druckspannungen auf das Zwischenelement 11.

Der Raum 43 ist vorliegend über Öl- bzw. Hydraulikleitungen 49, 51 mit Öl bzw. Hydraulikfluid versorgbar, wobei Öl über eine in Richtung der Mittelachse 3 der Gleitlagervorrichtung 1 im Bereich des Planetenträgers 25 verlaufende Ölleitung 49, die in eine in radialer Richtung 7 der Gleitlagervorrichtung 1 durch den Planetenträger 25 und das Innenelement 5 verlaufende Ölleitung 51 mündet, dem Raum 43 zuführbar ist. In dem Raum 43 befindliches Öl ist mittels einer zusätzlichen Ölleitung 53 in radialer Richtung 7 der Gleitlagervorrichtung 1 durch das Außenelement 9 und das Planetenrad 27 nach außen in Richtung der Verzahnung 29 abführbar.

In Fig. 2 ist ersichtlich, dass sowohl die Außenfläche 17 des Innenelements 5 als auch die Innenfläche 19 des Zwischenelements 11 gekrümmt bzw. gebogen sind, wobei jeweils einem seitlichen Begrenzungselement 31, 33 zugewandte Bereiche der Flächen 17, 19 einen geringeren Abstand zu einer Mittelachse 3 der Gleitlagervorrichtung 1 als ein bezüglich der seitlichen Begrenzungselemente 31, 33 mittlerer Bereich der Flächen 17, 19 aufweist. Die Flächen 17, 19 sind in der in Fig. 2 gezeigten Schnittansicht jeweils Teil einer Kreisfläche, deren Mittelpunkt insbesondere auf der Mittelachse 3 der Gleitlagervorrichtung 1 liegen, wobei ein der Außenfläche 17 des Innenelements 5 zugeordneter Radius 36 kleiner als ein der Innenfläche 19 des Zwischenelements 11 zugeordneter Radius 38 ist. Zudem sind die Flächen 17, 19 vorliegend symmetrisch zu einer Mittenquerschnittsebene 54 der Gleitlagervorrichtung 1 ausgeführt, in der vorliegend auch die Ölleitungen 51 und 53 liegen.

Die Außenfläche 15 des Zwischenelements 11 und die Innenfläche 13 des Außenelements 9 sind vorliegend Teil einer Zylinderfläche, deren Mittelachse im Grundzustand der Gleitlagervorrichtung der Mittelachse 3 der Gleitlagervorrichtung 1 entspricht. Alternativ oder zusätzlich hierzu können aber auch die Flächen 13, 15 in vergleichbarer Weise zu den Flächen 17, 19 gekrümmt oder gebogen ausgeführt sein.

Die Krümmung der Flächen 17, 19 und die Abstände 16, 20 sind dabei auch derart aufeinander abgestimmt, dass das einstückig ausgeführte Zwischenelement 11 zur Montage der Gleitlagervorrichtung 1 auf einfache Weise zwischen das Innenelement 5 und das Außenelement 9 einführbar ist.

Im Betrieb der Gleitlagervorrichtung 1 kann es aufgrund der dabei vorliegenden Lasten vorkommen, dass eine Achse des Planetenrads 27 und eine Achse des Planetenträgers 25, die in der gezeigten Ausführung deckungsgleich mit der Mittelachse 3 der Gleitlagervorrichtung 1 sind, zueinander schräggestellt sind. Durch die gebogene Ausführung der Flächen 17, 19 ist eine derartige Schiefstellung des Innenelements 5 gegenüber dem Außenelement 9 sehr gut ausgleichbar.

Die gezeigte robuste Gleitlagervorrichtung 1 ist beispielhaft für Umdrehungen in der Größenordnung von beispielsweise 3.000 Umdrehungen pro Minute bis 4.000 Umdrehungen pro Minute ausgelegt, wobei ein Gleitverschleiß im Bereich der Gleitlagervorrichtung 1 sehr gering ist. Dies resultiert daraus, dass eine sogenannte Mikroverschweißung, die bei herkömmlichen Gleitlagereinrichtungen bei einem Beginn einer Drehbewegung der Gleitlagervorrichtung durch einen kurzzeitigen Kontakt von Metall auf Metall vorliegen kann, durch das Vorsehen des vorliegend mit einem keramischen Werkstoff ausgeführten Zwischenelements 11 mit der erfindungsgemäßen Gleitlagervorrichtung 1 auf sichere Weise verhindert ist. Zudem ist die Gefahr eines starken Verschleißes im Bereich der Gleitlagervorrichtung 1 bei einer Mangelschmierung gegenüber bekannten Ausführungen stark reduziert.

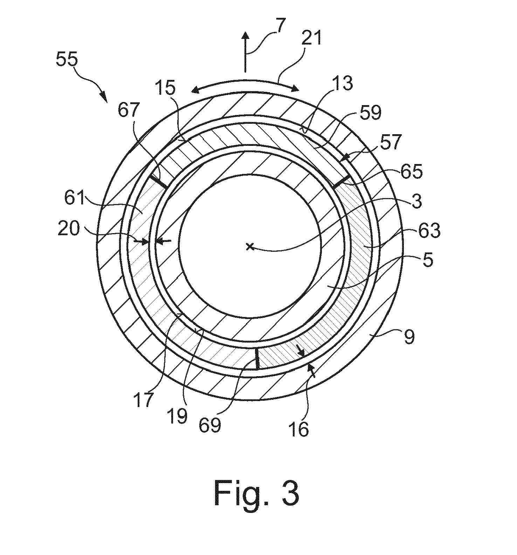

In Fig. 3 ist eine Gleitlagervorrichtung 55 gezeigt, die im Wesentlichen der Gleitlagervorrichtung 1 entspricht. Im Unterschied zu der Gleitlagervorrichtung 1 ist ein Zwischenelement 57 der Gleitlagervorrichtung 55 nicht einstückig, sondern in Umfangsrichtung 21 der Gleitlagervorrichtung 55 mehrteilig ausgeführt. Das Zwischenelement 57 weist vorliegend drei im Wesentlichen baugleiche Teile 59, 61, 63 auf, wobei bei einer alternativen Ausführung der Erfindung auch eine andere Anzahl von Teilen, insbesondere mehrere, vorgesehen sein können.

Zur Montage der Gleitlagervorrichtung 55 werden zunächst die Teile 59, 61, 63 in den Raum 43 zwischen dem Innenelement 5 und dem Außenelement 9 eingeführt. Wenn die Teile 59, 61, 63 hierbei in Umfangsrichtung 21 der Gleitlagervorrichtung 55 jeweils in Anlage zueinander gebracht sind, ist eine Einführung insbesondere des letzten Teils 59, 61 bzw. 63 des Zwischenelements 57 besonders einfach möglich. Anschließend werden zwischen benachbarten Teilen 59, 61, 63 des Zwischenelements 57 jeweils als Abstandshalter 65, 67, 69 ausgeführte Trennelemente eingeführt. Die Abstandshalter 65, 67, 69 und die Teile 59, 61, 63 des Zwischenelements 57 sind in montiertem Zustand der Gleitlagervorrichtung 55 gleichmäßig über dem Umfang der Gleitlagervorrichtung 55 verteilt angeordnet.

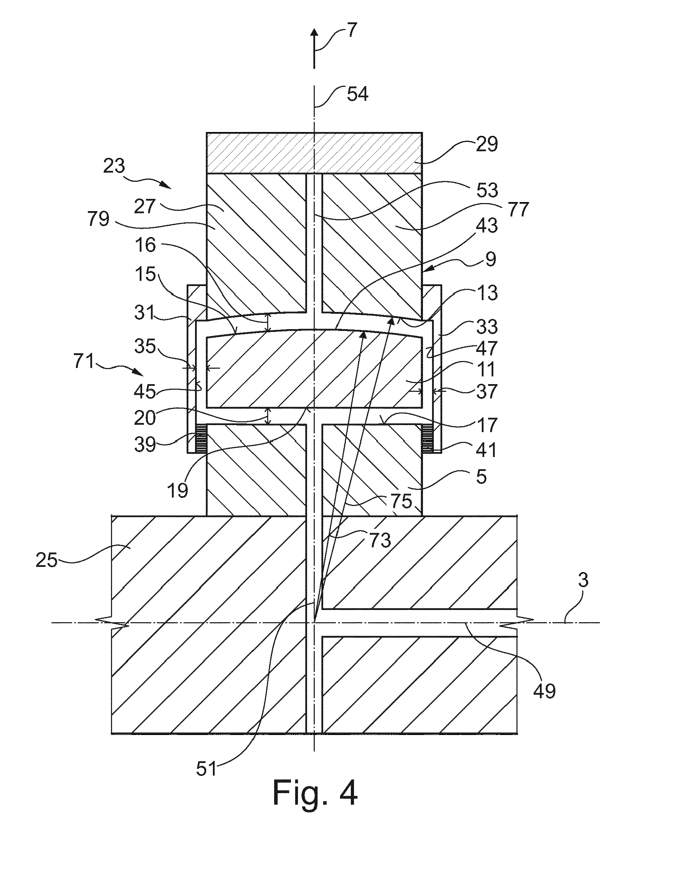

In Fig. 4 ist eine weitere Gleitlagervorrichtung 71 gezeigt, die im Wesentlichen der Gleitlagervorrichtung 1 entspricht, so dass im Folgenden lediglich auf die Unterschiede zwischen diesen Ausführungen eingegangen wird.

Sowohl die Außenfläche 17 des Innenelements 5 als auch die Innenfläche 19 des Zwischenelements 11 sind bei der Gleitlagervorrichtung 71 Teil einer Zylinderfläche, deren Mittelachse im Grundzustand der Gleitlagervorrichtung 71 der Mittelachse 3 der Gleitlagervorrichtung 71 entspricht.

Dagegen sind die Flächen 13, 15 des Außenelements 9 bzw. des Zwischenelements 11 gekrümmt bzw. gebogen, wobei jeweils dem seitlichen Begrenzungselement 31, 33 zugewandte Bereiche der Flächen 13, 15 einen geringeren Abstand zu einer Mittelachse 3 der Gleitlagervorrichtung 71 als ein bezüglich der seitlichen Begrenzungselemente 31, 33 mittlerer Bereich der Flächen 13, 15 aufweisen. Die Flächen 13, 15 sind in der in Fig. 4 gezeigten Schnittansicht jeweils Teil einer Kreisfläche, deren Mittelpunkt insbesondere auf der Mittelachse 3 der Gleitlagervorrichtung 1 liegt. Ein der Außenfläche 15 des Zwischenelements 11 zugeordneter Radius 73 ist dabei kleiner als ein der Innenfläche 13 des Außenelements 9 zugeordneter Radius 75, wobei die Flächen 13, 15 symmetrisch zu der Mittenquerschnittsebene 54 der Gleitlagervorrichtung 71 ausgeführt sind.

Alternativ oder zusätzlich hierzu können wiederum auch die Flächen 17, 19 in vergleichbarer Weise zu den Flächen 17, 19 zueinander korrespondierend gekrümmt oder gebogen ausgeführt sein.

Um die Gleitlagervorrichtung 71 auf einfache Weise montieren zu können, ist vorliegend das Außenelement 9 in axialer Richtung der Gleitlagervorrichtung 71 zweigeteilt ausgeführt und weist ein erstes Teil 77 und ein zweites Teil 79 auf. Die Teile 77, 79 des Außenelements 9 weisen vorliegend eine etwa identische Länge in axialer Richtung der Gleitlagervorrichtung 71 auf und werden bei der Montage der Gleitlagervorrichtung 71 in axialer Richtung betrachtet von entgegengesetzten Seiten um das Zwischenelement 11 angeordnet. Die Teile 77, 79 des Außenelements 9 sind vorliegend über eine Schweißverbindung miteinander verbunden, können alternativ oder zusätzlich hierzu aber auch über eine Schraubverbindung, eine Nietverbindung oder dergleichen miteinander verbunden werden.

Durch die gebogene Ausführung der Flächen 13, 15 kann in analoger Weise, wie bei dem obigen Ausführungsbeispiel beschrieben, eine Schiefstellung des Innenelements 5 gegenüber dem Außenelement 9 ausgeglichen werden.

### Bezugszeichenliste

- 1: Gleitlagervorrichtung
- 3: Mittelachse der Gleitlagervorrichtung
- 5: Innenelement der Gleitlagervorrichtung
- 7: radiale Richtung der Gleitlagervorrichtung
- 9: Außenelement der Gleitlagervorrichtung
- 11: Zwischenelement der Gleitlagervorrichtung
- 13: Innenfläche des Außenelements
- 15: Außenfläche des Zwischenelements
- 16: Abstand
- 17: Außenfläche des Innenelements
- 19: Innenfläche des Zwischenelements
- 20: Abstand
- 21: Umfangsrichtung der Gleitlagervorrichtung
- 23: Planeten radsatz
- 25: Planetenträger
- 27: Planetenrad
- 29: Verzahnung des Planetenrades
- 31: seitliches Begrenzungselement der Gleitlagervorrichtung
- 33: seitliches Begrenzungselement der Gleitlagervorrichtung
- 35: Abstand
- 36: Radius
- 37: Abstand
- 38: Radius
- 39: Dichteinrichtung
- 41: Dichteinrichtung
- 43: Raum
- 45: Fläche des seitlichen Begrenzungselements
- 47: Fläche des seitlichen Begrenzungselements
- 49: Ölleitung
- 51: Ölleitung
- 53: Ölleitung
- 54: Querschnittsmittelebene der Gleitlagervorrichtung
- 55: Gleitlagervorrichtung
- 57: Zwischenelement der Gleitlagervorrichtung
- 59, 61, 63: Teile des Zwischenelements
- 65, 67, 69: Abstandshalter; Trennelemente des Zwischenelements
- 71: Gleitlagervorrichtung
- 73: Radius
- 75: Radius
- 77: Teil des Außenelements
- 79: Teil des Außenelements

## Patentansprüche

1. Gleitlagervorrichtung (1, 55, 71) mit einem inneren ringförmigen Innenelement (5), wenigstens einem das Innenelement (5) in radialer Richtung (7) der Gleitlagervorrichtung (1, 55, 71) umfassenden wenigstens annähernd ringförmig aus geführten Zwischenelement (11, 57) und einem das wenigstens eine Zwischenelement (11, 57) in radialer Richtung (7) der Gleitlagervorrichtung (1, 55, 71) umfassenden ringförmigen Außenelement (9), wobei das Innenelement (5) relativ zu dem Außenelement (7) und das wenigstens eine Zwischenelement (11, 57) relativ zu dem Innenelement (5) und relativ zu dem Außenelement (7) drehbar ist, und wobei in einem Grundzustand der Gleitlagervorrichtung (1, 55, 71) das Innenelement (5) zu dem wenigstens einen Zwischenelement (11, 57) in radialer Richtung (7) der Gleitlagervorrichtung (1, 55, 71) und das wenigstens eine Zwischenelement (11, 57) zu dem Außenelement (9) beabstandet ist, **dadurch gekennzeichnet, dass** das Innenelement (5) und das Außenelement (7) mit einem metallischen Werkstoff und das wenigstens eine Zwischenelement (11, 57) mit einem nicht-metallischen Werkstoff ausgeführt sind.

2. Gleitlagervorrichtung nach Anspruch 1, **dadurch gekennzeichnet, dass** das Zwischenelement mit einem keramischen Werkstoff ausgeführt ist.

3. Gleitlagervorrichtung nach einem der Ansprüche 1 oder 2, **dadurch gekennzeichnet, dass** ein Abstand zwischen dem Zwischenelement (11, 57) und dem Innenelement (5) und ein Abstand zwischen dem Zwischenelement (11, 57) und dem Außenelement (7) in radialer Richtung der Gleitlagervorrichtung (1, 55, 71) derart gewählt ist, dass im Bereich des wenigstens einen Zwischenelements (11, 57) im Betrieb der Gleitlagervorrichtung auftretende Zugspannungen unterhalb eines definierten Grenzwerts liegen.

4. Gleitlagervorrichtung nach einem der Ansprüche 1 bis 3, **dadurch gekennzeichnet, dass** eine dem Innenelement (5) zugewandte Fläche (19) des wenigstens einen Zwischenelements (11, 57) und vorzugsweise eine dem Zwischenelement (11, 57) zugewandte Fläche (17) des Innenelements (5) in Richtung der Mittelachse (3) der Gleitlagervorrichtung (1, 55) betrachtet gekrümmt ausgeführt sind.

5. Gleitlagervorrichtung nach einem der Ansprüche 1 bis 4, **dadurch gekennzeichnet, dass** eine dem Außenelement (9) zugewandte Fläche (15) des wenigstens einen Zwischenelements (11, 57) und vorzugsweise eine dem Zwischenelement (11, 57) zugewandte Fläche (13) des Außenelements (9) in Richtung der Mittelachse (3) der Gleitlagervorrichtung (1, 55, 71) betrachtet gekrümmt ausgeführt sind.

6. Gleitlagervorrichtung nach einem der Ansprüche 4 oder 5, **dadurch gekennzeichnet, dass** die Außenfläche (17) des Innenelements (5), die Innenfläche (19) des Zwischenelements (11, 57), die Außenfläche (15) des Zwischenelements (11, 57) und/oder die Innenfläche (13) des Außenelements (9) einen konstanten Krümmungsradius (36, 38, 71, 73) aufweisen.

7. Gleitlagervorrichtung nach einem der Ansprüche 1 bis 6, **dadurch gekennzeichnet, dass** das Zwischenelement (57) in Umfangsrichtung (21) der Gleitla-gervorrichtung (55) mehrteilig ausgeführt ist.

8. Gleitlagervorrichtung nach Anspruch 7, **dadurch gekennzeichnet, dass** in Umfangsrichtung (21) der Gleitlagervorrichtung (55) zwischen jeweils zwei Teilen (59, 61, 63) des Zwischenelements (57) jeweils ein Trennelement (65, 67, 69) vorgesehen ist.

9. Gleitlagervorrichtung nach einem der Ansprüche 1 bis 8, **dadurch gekennzeichnet, dass** das Außenelement (9) in Achsrichtung der Gleitlagervorrichtung (71) wenigstens zweigeteilt ausgeführt ist.

10. Gleitlagervorrichtung nach einem der Ansprüche 1 bis 9, **dadurch gekennzeichnet, dass** in einem in radialer Richtung (7) der Gleitlagervorrichtung (1, 55, 71) zwischen dem Innenelement (5) und dem Außenelement (9) vorliegenden Raum (43) ein Hydraulikfluid angeordnet ist.
